# FASCICULE DE BREVET EUROPEEN

(11) **EP 0 546 879 B1**
(45) Date de publication et mention de la délivrance du brevet: **10.07.1996**
(21) Numéro de dépôt: 92403171.9
(22) Date de dépôt: 25.11.1992
(51) Int. Cl.: C08F 220/56, D21H 13/12

(54) **Nouveaux copolymères cationiques insolubles dans l'eau, de nouvelles dispersions et leur application dans l'enduction des papiers**
Nicht-wasserlösliche neue kationische Copolymere, neue Dispersionen und deren Verwendung in der Beschichtung von Papier
New water-insoluble cationic copolymers, new dispersions and their use in coating paper

(30) Priorité: 09.12.1991 FR 9115221
(43) Date de publication de la demande: 16.06.1993
(73) Titulaire: SOCIETE FRANCAISE HOECHST, F-92800 Puteaux (FR)
(72) Inventeur: Trouve, Claude, F-91330 Yerres (FR); Richard, Michel, F-95290 L'Isle Adam (FR); Mallo, Paul, F-78400 Chatou (FR); Anquetil, Jean-Yves, F-93200 Saint Denis (FR)
(74) Mandataire: Rinuy, Santarelli

(56) Documents cités:
- EP-A- 0 325 065
- EP-A- 0 419 654
- EP-A- 0 494 554

## Description

La présente invention concerne de nouveaux copolymères cationiques insolubles dans l'eau, de nouvelles dispersions et leur application dans l'enduction des papiers.

Des copolymères cationiques insolubles dans l'eau sont décrits dans la littérature et notamment des copolymères à base d'acrylamide et de (méth)acrylate de dialkylaminoalkyle réticulés avec de 5 à 100 ppm par rapport au poids des monomères mis en oeuvre qui présentent des propriétés épaississantes pour certains détergents et/ou adoucissants ménagers (demande de brevet européen N° 422179).

EP-A-494.554 décrit un copolymère cationique à base d'acrylamide contenant de 50 à 100 ppm d'acide bis-acryloamidoacétique, insoluble dans l'eau mais gonflable à l'eau, et son utilisation comme épaississant pour les assouplissants ménagers.

Dans l'industrie papetière, pour certains usages notamment graphiques et plus particulièrement pour l'impression par un procédé héliogravure, offset, flexogravure, on recherche des produits qui améliorent le lissé du papier tout en contrôlant sa microporosité et son affinité pour les encres (avec solvant organique ou avec eau) afin d'atteindre un rendu optimal de l'impression (au niveau de la densité, du brillant, de la teinte, du maculage ou du transpercement). Ces produits ne doivent pas modifier d'autres propriétés importantes telles qu' opacité, blancheur, tenue à l'eau.

Il serait souhaitable de disposer de produits compatibles avec un grand nombre de sauces de couchage. Afin de résoudre ce problème, la demanderesse a découvert de nouveaux copolymères cationiques insolubles dans l'eau caractérisés par le fait qu'ils sont à base d'acrylamide, désigné par la suite AAM, et d'un monomère cationique de formule générale (I) 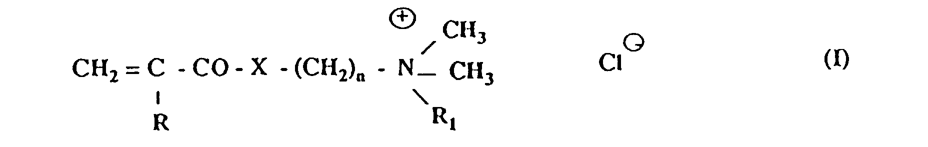 dans laquelle R et R₁, identiques ou différents, représentent un atome d'hydrogène ou un groupement méthyle, X représente un atome d'oxygène ou un radical NH et n représente 2 ou 3, contenant en proportions molaires de 5 à 30 % de motifs cationiques et réticulés avec de 0,01 % à 0,4 % en proportions molaires par rapport aux monomères précédents d'acide bisacrylamidoacétique, désigné par la suite ABAA.

L'invention a notamment pour objet les copolymères ci-dessus décrits, caractérisés en ce que lesdits copolymères sont réticulés avec environ de 0,01 % à 0,1 % en proportions molaires par rapport aux monomères, d'ABAA.

L'invention a plus particulièrement pour objet les copolymères tels que définis ci-dessus dans lequel le monomère de formule générale (I) est, soit de l'acrylate de diméthylaminoéthyle salifié par de l'acide chlorhydrique, désigné ci-après CHA, soit de l'acrylate de diméthylaminoéthyle quaternisé avec du chlorure de méthyle, désigné ci-après CMA, soit de l'acrylate de diéthylaminoéthyle quaternisé avec du chlorure de méthyle, désigné ci-après CME, soit le méthacrylate de diméthylaminoéthyle quaternisé avec du chlorure de méthyle, désigné par la suite CMM, soit enfin le chlorure de méthacrylamidopropyltriméthylammonium, désigné ci-après MAPTAC.

Avantageusement, le monomère cationique est le CMA. Parmi ces copolymères à base de CMA, l'invention a notamment pour objet ceux contenant un copolymère AAM-CMA, avec environ 80-20 en proportions molaires (à savoir, notamment 15 à 25 parties et plus particulièrement 18 à 22 parties de CMA pour 85 à 75, notamment 82 à 78 parties d'AAM), de préférence réticulé avec environ 0, 02 % mole d'ABAA (à savoir notamment de 0,015 à 0,025 % mole d'ABAA).

Les copolymères cationiques définis ci-dessus sont insolubles dans l'eau mais ils sont gonflables à l'eau. De ce fait, ils sont susceptibles d'absorber aisément plusieurs fois leur poids d'eau et de la libérer tout aussi facilement lorsqu'ils sont soumis par exemple à un fort cisaillement ou à un séchage.

La présente invention a encore pour objet les compositions destinées à l'enduction du papier contenant, à titre de principe actif, un des polymères définis précédemment.

Ces compositions sont caractérisées par le fait que ce sont des dispersions autoréversibles, dont la taille moyenne des particules est inférieure à 20 µm, constitués d'une part, par une phase aqueuse, contenant un des polymères définis précédemment, dispersée dans une phase huile, et d'autre part, par au moins deux agents émulsifiants présentant une valeur globale de HLB supérieure à 8 et dont au moins un de ces agents émulsifiants possède une valeur HLB inférieure à 5.

La phase huileuse de la dispersion est constituée par exemple par un ou plusieurs hydrocarbures hydrophobes tels que l'hexane, le cyclohexane, les coupes d'essences minérale en C₈-C₁₃ à chaîne droite ou ramifiée telles que les huiles paraffiniques ou paraffiniques/naphténiques notamment en ce qui concerne les huiles commerciales, celles vendues sous la dénomination d'huile blanche Shell, d'Isopar^{R}, de Solpar^{R}, ou d'Exxsol^{R}.

La phase aqueuse dispersée représente de préférence 30 à 75 % du poids total de la dispersion et elle contient en suspension notamment de 20 à 45 % en poids d'un copolymère défini précédemment.

L'agent émulsifiant de valeur HLB inférieur à 5 est choisi parmi les agents émulsifiants connus, solubles dans les huiles, comme le monostéarate, le monooléate ou le sesquioléate de sorbitanne, et il est avantageusement contenu dans la dispersion en proportions de 2 à 8 % en poids par rapport au poids total de la phase aqueuse dispersée.

Les agents émulsifiants présents dans la dispersion doivent présenter une valeur globale de HLB supérieure à 8, il est donc nécessaire d'employer habituellement un ou plusieurs agents émulsifiants possédant une valeur HLB supérieure à 10, de manière à compenser la valeur HLB inférieure à 5 d'au moins un des agents émulsifiants. Ces agents émulsifiants de valeur HLB supérieure à 10 sont choisis parmi les agents émulsifiants connus, hydrosolubles, comme les alkylphénols éthoxylés, les dialkylsulfosuccinates de sodium, les savons dérivant d'acides gras en C₁₀-C₂₂.

Les copolymères définis précédemment et les compositions précitées les contenant, qui ne seraient pas connus, peuvent être préparés par les méthodes analogues à celles qui sont décrites pour la préparation des polymères et les compositions les contenant connus.

Les copolymères définis précédemment et les compositions précitées peuvent être préparés notamment par polymérisation radicalaire au sein d'une émulsion eau dans huile. Ce type de polymérisation est largement décrit dans la littérature et il consiste à préparer, en présence d'un ou plusieurs émulsifiants solubles dans les huiles, une émulsion eau dans huile dont les particules ont une taille inférieure à 20 µm et contenant en solution dans la phase aqueuse dispersée les monomères, puis après désoxygénation soigneuse de cette émulsion, d'effectuer la réaction de polymérisation avec un amorçage, avec un ou plusieurs générateurs de radicaux libres, puis enfin de refroidir la dispersion obtenue à la température ambiante après y avoir introduit une quantité suffisante de tensioactif(s) hydrophiles, pour la rendre autoréversible.

L'émulsion eau dans huile de départ est préparée à l'aide d'agents émulsifiants eau dans huile connus à cet effet comme le monostéarate, le monooléate ou le sesquioléate de sorbitanne. Ces agents émulsifiants doivent présenter une valeur HLB inférieure à 5, et ils sont contenus dans l'émulsion en proportions avantageusement de 2 à 8 % en poids par rapport au poids total de la phase aqueuse.

La phase huileuse de l'émulsion est constituée par exemple par un ou plusieurs hydrocarbures hydrophobes tels que l'hexane, le cyclohexane, les coupes d'essences minérale en C₈-C₁₃ à chaîne droite ou ramifiée telles que les huiles paraffiniques ou paraffiniques/naphténiques commerciales vendues sous la dénomination d'huile blanche Shell, d'Isopar^{R}, de Solpar^{R}, ou d'Exxsol^{R}.

La phase aqueuse dispersée représente environ 30 à 75 % du poids total de l'émulsion et elle contient en solution notamment de 20 à 45 % en poids de monomères.

La réaction de polymérisation est amorcée par un ou plusieurs agents générateurs de radicaux libres tels que les couples rédox, comme le couple hydroperoxyde de cumène-disulfite de sodium, les azoïques comme l'acide azo-bis 4,4' (cyano-4 pentanoïque), le chlorhydrate d'azo-bis amidinopropane.

La température de polymérisation dépend de l'amorceur de polymérisation choisi et peut varier dans des limites étendues, de 5 à 100°C par exemple, mais en général la polymérisation est effectuée à pression normale à des températures de 10 à 80°C. Avantageusement, la polymérisation est effectuée de manière quasi adiabatique, à la pression ambiante.

En fin de polymérisation, on introduit dans la dispersion obtenue un ou plusieurs agents émulsifiants dont la valeur HLB est généralement supérieure à 10. Il s'agit là essentiellement, de produits hydrophiles tels que les alkylphénols éthoxylés, les dialkylsulfosuccinates de sodium, des savons dérivant d'acides gras en C₁₀-C₂₂. Avantageusement, on utilise des nonylphénols éthoxylés avec de 6 à 12 moles d'oxyde d'éthylène. Dans la dispersion finale, on incorpore de 1,5 à 8 % en poids par rapport au poids total de la dispersion d'un ou plusieurs émulsifiants présentant une valeur HLB supérieure à 10 de manière que la valeur HLB globale des émulsifiants présents dans la dispersion soit supérieure à 8.

Les copolymères selon la présente invention peuvent être aisément isolés des dispersions les contenant. Pour ce faire, par exemple on dilue la dispersion avec le solvant utilisé pour préparer lesdits copolymères tels que le cyclohexane ou l'hexane, de préférence avec une partie en poids puis on introduit lentement sous agitation et à la température ambiante dans 70 à 80 parties en poids d'un autre solvant tel l'acétone anhydre. Après 30 minutes d'agitation, le précipité obtenu est filtré, puis lavé dans ce dernier solvant et enfin séché sous pression réduite à poids constant. On obtient ainsi avec un rendement quasi quantitatif un copolymère selon l'invention, à l'état solide, sous forme de microperles insolubles dans l'eau.

Les copolymères selon la présente invention notamment lorsqu'ils sont contenus dans une composition telle que décrite précédemment présentent d'excellentes propriétés pour conférer un excellent lissé aux support papier et/ou carton.

Pour cette application, les produits selon la présente invention sont mis en oeuvre très simplement sur les appareillages de couchage classiques tels que ceux connus sous les noms de "size-press", "size-tub", "calender sizing", etc, en incorporant dans la sauce de couchage contenant les pigments et les liants habituels ainsi qu'éventuellement d'autres additifs classiques, la quantité nécessaire de copolymère défini précédemment, pour obtenir le lissé souhaité.

Le copolymère est utilisé sous forme de la composition précédemment définie. Dès son incorporation dans la sauce de couchage aqueuse contenant les ingrédients habituels tels que pigments, liants, à une dose de matières sèches comprise entre environ 50 à 75 % en poids, la composition contenant le polymère défini précédemment s'inverse immédiatement en libérant dans la sauce de couchage le copolymère gonflé d'eau mais insoluble dans l'eau. Les doses d'emploi exprimées en gramme de copolymère sec par rapport au poids du support papier sec varient de 0,05 à 0,5 %.

Les copolymères et les compositions les contenant selon la présente invention permettent d'améliorer considérablement l'état de surface des supports papier obtenus aussi bien avec une pâte chimique (pâte sans bois) qu'avec une pâte mécanique (pâte avec bois). Outre l'amélioration de l'état de surface et la diminution de la rugosité du papier, particulièrement pour les papiers issus d'une pâte mécanique; les produits selon l'invention permettent d'améliorer également les conditions de mise en oeuvre du couchage, notamment :
- en supprimant le transpercement du papier par la sauce de couchage avec pour conséquence l'élimination du blanchiment du backing-roll,
- en lubrifiant la lame : la machinabilité est améliorée avec des risques de casse réduits ;
- en améliorant la rétention d'eau dynamique sur le papier couché: l'eau pénètre dans le support plus lentement que dans les procédés classiques, ce qui entraîne un couchage plus régulier, sans masque ni bavure ;
- en fournissant des sauces de couchage compatibles avec des produits à caractère cationique.

On a constaté que l'amélioration du lissé d'un support papier était notamment fonction du taux de réticulation du copolymère utilisé, donc de réticulant. Pour un taux de réticulant inférieur à 0,01% molaire par rapport aux monomères d'acide bisacrylamidoacétique, on n'obtient pratiquement pas d'amélioration du lissé. De même, à partir d'un taux de réticulant supérieur à 0,4 % molaire d'acide bisacrylamidoacétique, on n'observe plus d'amélioration du lissé.

Les exemples suivants illustrent la présente invention sans toutefois la limiter.

### EXEMPLE 1

On mélange à la température ambiante, sous agitation, 300 g d'eau bidistillée, 6 g (28,5 mmole) d'acide citrique cristallisé avec une molécule d'eau, 0,5 g d'une solution aqueuse à 40 % en poids de sel de sodium de l'acide diéthylènetriaminopentaacétique, désigné DTPANa, 160 g d'une solution aqueuse commerciale à 76 % en poids de CMA, soit 0,63 mole, 178,5 g (2,51 mole) d'acrylamide cristallisé, 0,124g (0,63 mmole) d'ABAA dissous extemporanément dans environ 0,7 g de soude 1N et 45 mg de chlorhydrate d'azobisacrylamidinopropane, couramment désigné ABAH, dissous dans le minimum de soude 0,1 N. Le poids total de cette solution aqueuse est ensuite ajusté à 700 g avec de l'eau bidistillée et son pH est ajusté, si nécessaire, à 3,5 avec quelques gouttes d'une solution aqueuse d'acide chlorhydrique. On obtient une solution aqueuse désignée S.

Par ailleurs, On mélange à la température ambiante, sous agitation, 241 g d'huile commerciale paraffinique-naphténique présentant un point d'ébullition de 300 à 350°C, désigné par la suite H, et 21 g de sesquioléate de sorbitanne. Puis on introduit dans ce mélange en 15 minutes environ, sous forte agitation et en maintenant la température vers +5°C, la solution aqueuse S précédente. La dispersion obtenue est soumise pendant 1 minute environ à une agitation énergique avec une turbine du type Ultra-Turax de manière à obtenir une viscosité Brookfield déterminée à 20°C avec un appareil Brookfield RVT, d'environ 3700 mPa·s.

L'émulsion ainsi obtenue est transférée dans un réacteur de polymérisation, puis elle est soigneusement désoxygénée sous agitation par un barbotage d'azote en maintenant la température inférieure à 10°C. Ensuite sous agitation, on introduit en cinq minutes, 5 ml d'une solution de 10 g d'hydroperoxyde de cumène dans un litre d'huile précédente H, puis en 25 minutes, 23 ml d'une solution de 2,24 g de métabisulfite de sodium dans un litre d'eau bidistillée. On laisse ensuite se développer la réaction de polymérisation d'une manière quasi adiabatique. En 25 minutes environ, la température du milieu réactionnel croît de 62°C avec pente moyenne de 2 à 3°C par minute. Lorsque la température du milieu réactionnel décroît, on le chauffe et on le maintient 1 heure à 80°C sous agitation puis on le refroidit à 50°C. A cette température, on introduit 10 g de nonylphénol éthoxylé avec 10 moles d'oxyde d'éthylène et 10 g de nonylphénol éthoxylé avec 12 moles d'oxyde d'éthylène puis on le refroidit à la température ambiante.

On obtient ainsi environ 1 Kg d'une émulsion eau dans huile contenant dans la phase aqueuse dispersée un copolymère AAM-CMA, 80-20 en proportions molaires, réticulé avec 0,02 % en proportions molaires par rapport aux monomères mis en oeuvre d'ABAA. L'émulsion présente une viscosité Brookfield déterminée à 20°C de 710 mPa.s et le copolymère isolé en suspension à 1 % en poids dans l'eau présente une viscosité Brookfield de 27400 mPa.s et à 1 % en poids dans une solution aqueuse à 0,1 % de chlorure de sodium une viscosité Brookfield de 1280 mPa.s.

### EXEMPLE 2

On reproduit l'exemple 1 en n'utilisant que 62 mg (0,315 mmole) d'ABAA. On obtient ainsi environ 1 Kg d'une émulsion eau dans huile contenant dans la phase aqueuse dispersée un copolymère AAM-CMA, 80-20 en proportions molaires, réticulé avec 0,01 % en proportions molaires par rapport aux monomères mis en oeuvre d'ABAA. L'émulsion présente une viscosité Brookfield déterminée à 20°C de 1040 mPa.s et le copolymère isolé en suspension à 1 % en poids dans l'eau présente une viscosité Brookfield de 15900 mPa.s et à 1% en poids dans une solution aqueuse à 0,1 % de chlorure de sodium une viscosité Brookfield de 200 mPa.s.

### EXEMPLES A1-A3 ET EXEMPLES DE COMPARAISON C1-C3

Dans ces exemples, on traite un support papier obtenu, soit avec une pâte chimique, B1, soit avec une pâte mécanique, B2, soit une pâte à bois non collé, B3, avec une sauce de couchage dont la composition en matières sèches, exprimées en g, est donnée dans le tableau I, sur un Helicoater type MK IV de la Société Charlestown Engineering. Le poids de la dépose, ainsi que le pH et la viscosité de la sauce de couchage sont mentionnés également dans le tableau I. Le papier couché est ensuite soumis à un séchage par infrarouge à une puissance de 36 kWh pendant 120 secondes, puis son lissé est déterminé avec un appareil de mesure BEKK selon la norme française NF Q 03-012 de février 1974, et les résultats sont exprimés en seconde. Le lissé est d'autant meilleur que le temps est plus long.

La porosité BEKK qui détermine la perméabilité à l'air d'un papier est mesurée sur le même appareil qui permet de connaître le lissé BEKK en remplaçant le dé plat par le dé porteur de rayures concentriques. Avec cet appareil, on détermine le temps nécessaire à 100 cm³ d'air pour traverser 1 cm² de l'échantillon sous une dépression de 380 mbar, et on exprime le résultat en secondes. Afin d'améliorer la précision de cette mesure, on effectue la mesure sur plusieurs échantillons identiques superposés et on exprime le résultat en divisant le temps mesuré par le nombre d'échantillons.

Dans le tableau I, les poids sont exprimés en grammes et les viscosités, déterminées sur un appareil Brookfield RVT à 20 °C, à la vitesse et avec l'axe recommandés pour la valeur indiquée, sont exprimées en mPa.s. Les modificateurs de rhéologie de la sauce de couchage sont, soit les produits décrits dans les exemples, soit de la carboxyméthylcellulose, désignée CMC, commercialisée par la demanderesse sous la référence TYLOSE^{R} VCLL, et qui est aujourd'hui le modificateur de rhéologie le plus utilisé. Le liant L1 est un liant couramment utilisé dans le couchage du papier et c'est un latex SBR commercialisé par la Société Dow France sous la référence DL 675 SBR. Le pH de la sauce de couchage est ajusté à la valeur indiquée avec de la soude à 10 %. L'angle de la lame de l'appareil de couchage est exprimé en degrés.

La viscosité et le pH des sauces de couchage de ces deux exemples sont stables dans le temps et elles ne présentent aucun problème d'applicabilité : les pressions de lame utilisées sont sensiblement similaires.

L'examen du tableau I permet de constater qu'en utilisant le kaolin comme pigment, la composition selon la présente invention donne un lissé BEKK supérieur à 30 % à celui donné par la CMC. Ce gain autorise en conséquence une économie de dépose d'au moins 1g/m², soit une économie de 17%. De même, dans le test TABER, norme TAPPI T 476 pm76, qui détermine la résistance du papier à l'abrasion humide, on constate que le produit selon l'invention donne une valeur de turbidité moyenne exprimée en Ntu de 153 contre 178 pour la CMC, ce qui montre que la composition selon la présente invention confère au papier traité une meilleure résistance à l'état humide [cf exemples A1 et C1.]

Avec l'emploi de carbonate de calcium comme pigment, la composition selon la présente invention améliore sensiblement le lissé (95 %) et la porosité (52 %) [cf exemples A3 et C3.]

De plus, la composition de la présente invention a été testée en Héliotest ce qui permet de simuler avec une très bonne précision le comportement des papiers lors de l'impression en Héliogravure.

L'Héliotest consiste à effectuer une impression d'un papier calandré avec un cylindre de cuivre dont la surface est gravée avec des alvéoles carrées ou rondes. La profondeur des alvéoles est d'autant plus grande (au maximum 3 à 4 dixièmes de millimètre) que l'impression choisie est plus foncée. La partie basse du cylindre baigne dans l'encre, l'excès d'encre entraîné est ensuite éliminé avec une raclette biseautée et enfin le cylindre transfère au papier l'encre résiduelle sous une forte pression réalisée à l'aide d'un cylindre de caoutchouc venant appuyer le papier sur le cylindre de cuivre gravé. Le test s'effectue à une vitesse constante de 1 m/s sur un papier calandré. On exprime les résultats en déterminant la distance du vingtième point manquant en utilisant une quantité donnée d'encre (3 à 4 gouttes seulement).

Avec les formulations données dans les exemples A3 et C3 (cf tableau I) et avec une dépose de 8,6 à 8,9 g/m² la distance au vingtième point manquant passe de 3 mm (exemple C3) à 30 mm (exemple A3) ce qui constitue une performance remarquable.

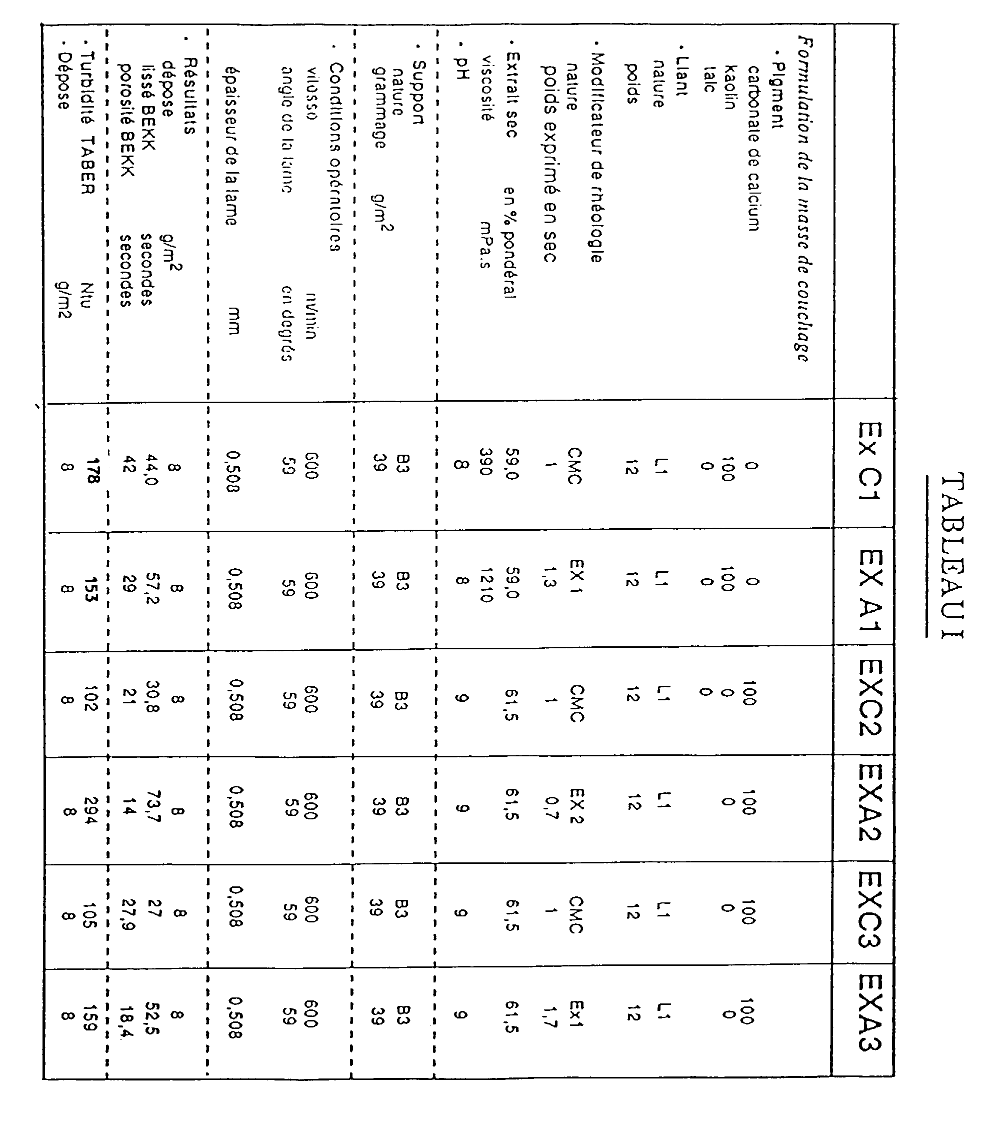

## Revendications

1. Copolymères cationiques insolubles dans l'eau caractérisés par le fait qu'ils sont à base d'acrylamide, et d'un monomère cationique de formule générale (I) 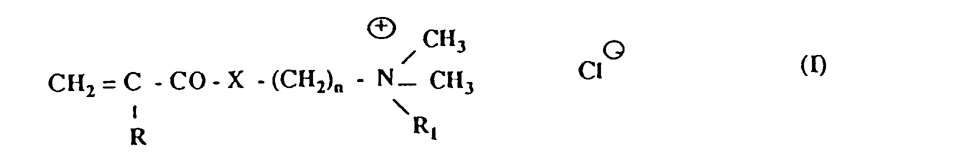 dans laquelle R et R₁, identiques ou différents, représentent un atome d'hydrogène ou un groupement méthyle, X représente un atome d'oxygène ou un radical NH et n représente 2 ou 3, contenant en proportions molaires de 5 à 30 % de motifs cationiques et réticulés avec de 0,01% à 0,4% en proportions molaires par rapport aux monomères précédents d'acide bisacrylamidoacétique.

2. Copolymères cationiques selon la revendication 1, caractérisés par le fait qu'ils sont réticulés avec environ de 0,01 % à 0,1 % en proportions molaires par rapport aux monomères d'acide bisacrylamidoacétique.

3. Copolymères cationiques selon l'une quelconque des revendications 1 et 2, caractérisés par le fait que le monomère cationique est l'acrylate de diméthylaminoéthyle salifié par de l'acide chlorhydrique.

4. Copolymères cationiques selon l'une quelconque des revendications 1 et 2, caractérisés par le fait que le monomère cationique est l'acrylate de diméthylaminoéthyle quaternisé par le chlorure de méthyle.

5. Copolymères cationiques selon la revendication 4, caractérisés par le fait qu'ils contiennent en proportions molaires environ 20 % de monomère cationique.

6. Copolymères cationiques selon la revendication 5, caractérisés par le fait qu'il sont réticulés avec environ 0,02 % en proportions molaires par rapport aux monomères d'acide bisacrylamidoacétique.

7. Dispersions autoréversibles dont la taille moyenne des particules est inférieure à 20 µm, constituées d'une part, par une phase aqueuse dispersée dans une phase huile et d'autre part par au moins deux agents émulsifiants présentant une valeur globale de HLB supérieure à 8 et dont au moins un de ces agents possède une valeur HLB inférieure à 5, caractérisées par le fait qu'elles contiennent dans la phase aqueuse l'un au moins des copolymères cationiques selon l'une quelconque des revendications 1 à 6.

8. Dispersions selon la revendication 7, caractérisées par le fait qu'elles contiennent pondéralement en suspension dans la phase aqueuse dispersée de 20 à 45 % de copolymères cationiques.

9. Dispersions selon l'une quelconque des revendications 7 et 8, caractérisées par le fait que la phase aqueuse dispersée représente 30 à 75 % du poids total de la dispersion.

10. Dispersions selon l'une quelconque des revendications 7 à 9, caractérisées par le fait qu'elles sont obtenues par un procédé consistant à préparer, en présence d'un ou plusieurs émulsifiants solubles dans les huiles, une émulsion eau dans huile dont les particules ont une taille inférieure à 20 µm et contenant en solution dans la phase aqueuse dispersée des monomères, puis après désoxygénation soigneuse de cette émulsion, d'effectuer la réaction de polymérisation avec un amorçage, avec un ou plusieurs générateurs de radicaux libres, puis enfin de refroidir la dispersion obtenue à la température ambiante après y avoir introduit une quantité suffisante d'émulsifiants pour la rendre autoréversible.

11. Utilisation des copolymères selon l'une quelconque des revendications 1 à 6 pour conférer du lissé aux support papier ou carton.

12. Utilisation des dispersions selon l'une quelconque des revendications 7 à 10 pour conférer du lissé aux supports papier ou carton.

## Patentansprüche

1. Wasserunlösliche kationische Copolymere, **dadurch gekennzeichnet**, daß sie auf Acrylamid und einem kationischen Monomer der allgemeinen Formel (I) 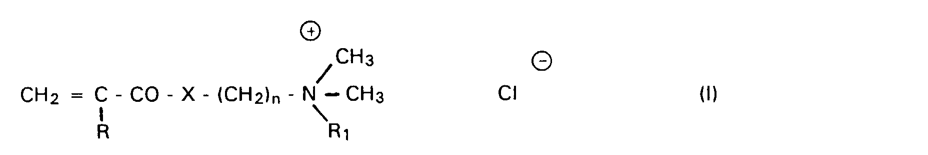 basieren, wobei in dieser Formel R und R₁, gleich oder verschieden, ein Wasserstoffatom oder eine Methylgruppe darstellen, X ein Sauerstoffatom oder einen NH-Rest bezeichnet und n 2 oder 3 ist, und in molaren Anteilen von 5 bis 30% kationische Einheiten enthalten sowie mit 0,01% bis 0,4% in molaren Anteilen, bezogen auf Bisacrylamidoessigsäurevormonomere, vernetzt sind.

2. Kationische Copolymere nach Anspruch 1, dadurch gekennzeichnet, daß sie mit etwa 0,01% bis 0,1% in molaren Anteilen, bezogen auf Bisacrylamidoessigsäuremonomere, vernetzt sind.

3. Kationische Copolymere nach einem der Ansprüche 1 und 2, dadurch gekennzeichnet, daß das kationische Monomer mit Salzsäure in Salz umgewandeltes Dimethylaminoethylacrylat ist.

4. Kationische Copolymere nach einem der Ansprüche 1 und 2, dadurch gekennzeichnet, daß das kationische Monomer mit Methylenchlorid quaterniertes Dimethylaminoethylacrylat ist.

5. Kationische Copolymere nach Anspruch 4, dadurch gekennzeichnet, daß sie in molaren Anteilen etwa 20% kationisches Monomer enthalten.

6. Kationische Copolymere nach Anspruch 5, dadurch gekennzeichnet, daß sie mit etwa 0,02% in molaren Anteilen, bezogen auf Bisacrylamidoessigsäuremonomere, vernetzt sind.

7. Autoreversible Dispersionen, bei denen die mittlere Partikelgröße kleiner als 20 µm ist, wobei sie einerseits aus einer wäßrigen Phase, die in einer Ölphase dispergiert ist, und andererseits aus wenigstens zwei Emulgationsmitteln bestehen, die einen Gesamt-HLB-Wert größer als 8 aufweisen und von denen wenigstens eines der Mittel einen HLB-Wert kleiner als 5 besitzt, dadurch gekennzeichnet, daß sie in der wäßrigen Phase wenigstens eines der kationischen Copolymeren nach einem der Ansprüche 1 bis 6 enthalten.

8. Dispersionen nach Anspruch 7, dadurch gekennzeichnet, daß sie in Suspension in der wäßrigen dispergierten Phase von 20 bis 45 Gew.-% kationische Copolymere enthalten.

9. Dispersionen nach einem der Ansprüche 7 und 8, dadurch gekennzeichnet, daß die wäßrige dispergierte Phase 30 bis 75% des Gesamtgewichts der Dispersion darstellt.

10. Dispersionen nach einem der Ansprüche 7 bis 9, dadurch gekennzeichnet, daß sie durch ein Verfahren erhalten werden, wobei dieses Verfahren daraus besteht, daß in Gegenwart eines oder mehrerer in Öl löslicher Emulsionsmittel eine Wasser-in-Öl-Emulsion, deren Partikelgröße kleiner als 20 µm ist und die eine Lösung aus Monomeren in der wäßrigen dispergierten Phase enthält, vorbereitet wird, wonach nach sorgfältiger Reduktion dieser Emulsion die Polymerisationsreaktion mit einem oder mehreren freien Radikalerzeugern gestartet wird, und daß schließlich die erhaltene Dispersion auf Umgebungstemperatur abgekühlt wird, nachdem ihr eine ausreichende Menge Emulsionsmittel zugegeben wurde, um sie autoreversibel zu machen.

11. Verwendung der Copolymere nach einem der Ansprüche 1 bis 6, um einem Trägermaterial aus Papier oder Karton Glätte zu verleihen.

12. Verwendung der Dispersionen nach einem der Ansprüche 7 bis 10, um einem Trägermaterial aus Papier oder Karton Glätte zu verleihen.

## Claims

1. Cationic copolymers insoluble in water, characterised by the fact that they are based on acrylamide and a cationic monomer of the general formula (I) 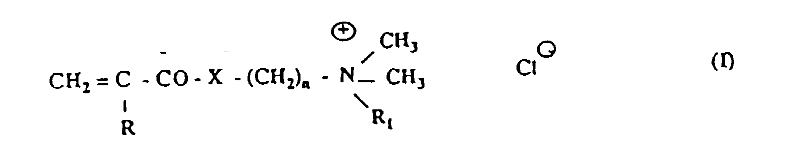 in which R and R₁, identical or different, represent a hydrogen atom or a methyl group, X represents an oxygen atom or an NH radical and n represents 2 or 3, containing, in molar proportions, 5 to 30% of cationic units and cross linked with 0.01% to 0.4%, in molar proportions with respect to the above monomers, of bisacrylamidoacetic acid.

2. Cationic copolymers according to Claim 1, characterised by the fact that they are cross linked with approximately 0.01% to 0.1%, in molar proportions with respect to the monomers, of bisacrylamidoacetic acid.

3. Cationic copolymers according to either one of Claims 1 and 2, characterised by the fact that the cationic monomer is dimethylaminoethyl acrylate salified with hydrochloric acid.

4. Cationic copolymers according to either one of Claims 1 and 2, characterised by the fact that the cationic monomer is dimethylaminoethyl acrylate quaternised with methyl chloride.

5. Cationic copolymers according to Claim 4, characterised by the fact that they contain, in molar proportions, approximately 20% of cationic monomer.

6. Cationic copolymers according to Claim 5, characterised by the fact that they are cross linked with approximately 0.02%, in molar proportions with respect to the monomers, of bisacrylamidoacetic acid.

7. Auto-reversible dispersions whose mean particle size is below 20 µm, consisting of on the one hand an aqueous phase dispersed in an oil phase and on the other hand at least two emulsifying agents having a total HLB value above 8 and where at least one of these agents has an HLB value below 5, characterised by the fact that they contain, in the aqueous phase, at least one of the cationic copolymers according to any one of Claims 1 to 6.

8. Dispersions according to Claim 7, characterised by the fact that they contain, by weight in suspension in the dispersed aqueous phase, 20 to 45% of cationic copolymers.

9. Dispersions according to either one of Claims 7 and 8, characterised by the fact that the dispersed aqueous phase represents 30 to 75% of the total weight of the dispersion.

10. Dispersions according to any one of Claims 7 to 9, characterised by the fact that they are obtained by a method consisting of preparing, in the presence of one or more emulsifiers soluble in the oils, a water-in-oil emulsion whose particles have a size below 20 µm and containing, in solution in the dispersed aqueous phase, monomers, and then, after careful deoxygenation of this emulsion, effecting the polymerisation reaction with inoculation, with one or more free radical generators, and then finally cooling the dispersion obtained to room temperature after introducing therein a sufficient quantity of emulsifiers to make it auto-reversible.

11. Use of the copolymers according to any one of Claims 1 to 6 for conferring smoothness on paper or cardboard media.

12. Use of the dispersions according to any one of Claims 7 to 10 for conferring smoothness on paper or cardboard media.
